# FASCICULE DE BREVET EUROPEEN

(11) **EP 3 519 775 B1**
(45) Date de publication et mention de la délivrance du brevet: **10.11.2021**
(21) Numéro de dépôt: 17780830.0
(22) Date de dépôt: 22.09.2017
(51) Int. Cl.: G01C 21/34, G06Q 50/00, G06Q 10/02, G01C 21/36

(54) **PROCEDE DE GENERATION DE CARNETS DE VOYAGE COLLABORATIFS SUR DES TERMINAUX ELECTRONIQUES EMBARQUES DANS UN VEHICULE**
VERFAHREN ZUR ERZEUGUNG GEMEINSAMER REISETAGEBÜCHER AUF IN EINEM FAHRZEUG EINGEBETTETEN ELEKTRONISCHEN ENDGERÄTEN
METHOD OF GENERATION OF COLLABORATIVE TRAVEL DIARIES ON ELECTRONIC TERMINALS EMBEDDED IN A VEHICLE

(30) Priorité: 28.09.2016 FR 1659151
(43) Date de publication de la demande: 07.08.2019
(73) Titulaire: PSA Automobiles SA, 78300 Poissy (FR)
(72) Inventeur: SANCIER, Olivier, 78650 Beynes (FR); LE JEMTEL, Emmanuelle, 92700 Colombes (FR); PERDEREAU, Valentin, 75007 Paris 07 (FR); CUVILLIER, Nicolas, 75013 Paris (FR); DELAVEAU, Vanessa, 17440 Aytre (FR); PEUGEOT, Xavier, 92100 Boulogne Billancourt (FR); GRANDMOUGIN, Sebastien, 78000 Versailles (FR); MEYER, Richard, 92500 Rueil Malmaison (FR)
(74) Mandataire: Jeannin, Laurent Jean-Pierre
(86) Numéro de dépôt international: PCT/FR2017/052550
(87) Numéro de publication internationale: WO 2018/060574

(56) Documents cités:
- US-A1- 2014 316 829
- US-A1- 2015 222 680
- US-A1- 2016 112 852

## Description

### Domaine de l'invention

La présente invention concerne d'une manière générale la création d'un carnet de voyage pendant un trajet à bord d'un véhicule.

### Arrière-plan de l'invention

Il est connu de l'art antérieur des dispositifs permettant la génération d'un carnet de voyage au cours d'un trajet à bord d'un véhicule.

La demande de brevet US 2016/112852 A1 divulgue un dispositif mobile et un service de voyage mobile.

La demande de brevet EP 1 178 286 divulgue ainsi un dispositif embarqué comportant un assistant personnel (PDA) relié à un ordinateur de bord de véhicule doté d'un système de navigation. Le PDA est apte à transmettre certaines données qu'il héberge à l'ordinateur de bord pour réaliser par exemple un carnet de voyage. Toutefois, ce dernier n'est constitué que par le seul passager possédant le PDA ce qui limite nettement son intérêt.

On connaît également de la demande française FR 2 995 990 un dispositif comportant un terminal principal constitué par une tablette tactile intégrée à la planche de bord d'un véhicule automobile et permettant de générer un carnet de voyage en recueillant des données d'appareils tels que appareil photo, outil de navigation, scanner, camera vidéo.

Le carnet de voyage ainsi généré devient multimédia et peut contenir par exemple du texte descriptif, des photos, un fond de carte retraçant l'itinéraire emprunté, des vidéos prises pendant le voyage, ou des sons entendus et enregistrés pendant l'itinéraire.

Afin de permettre à plusieurs occupants du véhicule de mettre en forme et/ou d'enrichir ce carnet de voyage, le dispositif comprend également deux terminaux secondaires constitués par des tablettes tactiles agencées dans les dossiers des sièges avant du véhicule. Ces deux terminaux secondaires sont connectés au poste de travail principal de sorte que les occupants des places arrière peuvent accéder au carnet de voyage en cours de génération et le modifier ou le compléter à loisir.

Un tel dispositif permet donc de réaliser un carnet de voyage collaboratif mais a pour inconvénient de nécessiter un travail de mise en forme conséquent de la part des passagers pouvant les rebuter. En outre seul le terminal principal stockant le carnet de voyage, ce dernier doit être exporté en ligne si les passagers souhaitent pouvoir le consulter ultérieurement.

### Objet et résumé de l'invention

La présente invention vise à faciliter la génération de carnets de voyage collaboratifs pour l'ensemble des passagers d'un véhicule.

Elle propose à cet effet un procédé de génération de carnets de voyage collaboratifs sur des terminaux électroniques embarqués dans un véhicule et connectés entre eux via un réseau local, caractérisé en ce qu'il comporte les étapes suivantes :
- création automatique sur chaque dit terminal d'un carnet de voyage lors de la connexion de ce terminal audit réseau local ;
- partage d'un ou plusieurs contenus média hébergés par l'un desdits terminaux avec un ou plusieurs autres terminaux dudit réseau local ; et
- pour chaque événement de partage réalisé, ajout automatique dans le carnet de voyage de chacun desdits terminaux, d'une entrée notifiant cet événement.

L'invention permet de réaliser automatiquement sur l'ensemble des terminaux embarqués connectés à un même réseau local, des carnets de voyage collaboratifs relatant les événements de partage de contenus médias intervenus entre ces terminaux lors d'un trajet effectué par le véhicule.

Elle trouve particulièrement son intérêt lorsque les terminaux connectés en réseau sont de type nomade (par exemple des Smartphones ou tablettes tactiles) et appartiennent chacun à un passager du véhicule.

Dans un tel cas de figure, lorsque les passagers quittent le véhicule au terme du trajet avec leur terminal nomade, ce dernier contient un carnet de voyage leur permettant de se remémorer les événements de partage intervenus entre eux durant ce trajet.

Selon des caractéristiques préférées du procédé selon l'invention, prises seules ou en combinaison :
- chaque dite entrée associée à un événement de partage mentionne le terminal ou l'utilisateur de ce terminal ayant effectué ce partage, l'horaire au moment de ce partage ainsi que certaines métadonnées textuelles et/ou visuelles associées au ou aux contenus média partagés ;
- chaque dite entrée associée à un événement de partage mentionne également la position du véhicule au moment de ce partage ;
- le carnet de voyage de chaque dit terminal se présente sous la forme d'une liste chronologique dans laquelle les nouvelles entrées sont intégrées successivement au dessus des plus anciennes ;
- une première entrée de départ est automatiquement générée sur chaque dit carnet de voyage lors de sa création, cette première entrée mentionnant l'horaire et la position du véhicule à cet instant ;
- le carnet de voyage de chaque dit terminal est consultable pendant sa constitution de sorte à permettre à l'utilisateur de ce terminal de lire les contenus médias dont le partage a été notifié, soit directement si ce terminal les hébergent lui-même, soit par lecture en mode continu si ces derniers sont hébergés par d'autres terminaux dudit réseau local ;
- le carnet de voyage de chaque dit terminal est automatiquement clôturé lorsque le terminal se déconnecte dudit réseau local ;
- une dernière entrée d'arrivée est automatiquement générée sur chaque dit carnet de voyage lors de sa clôture, cette dernière entrée mentionnant l'horaire et la position du véhicule à cet instant ;
- le carnet de voyage de chaque dit terminal peut être posté sur des réseaux sociaux en ligne grâce à des liens hypertextes ; et/ou
- le partage des contenus médias et la génération desdits carnets de voyages sont réalisés par une application de partage pair à pair installée sur chacun desdits terminaux et mettant en œuvre un protocole d'interopérabilité multi plate-formes.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue schématique d'un système de partage de contenus média entre des terminaux permettant la mise en œuvre du procédé de création d'un carnet de voyage collaboratif pendant un trajet à bord d'un véhicule ; et
- la figure 2 représente un exemple d'un carnet de voyage en cours de création sur l'un des terminaux du système de partage de la figure 1.

### Description détaillée d'un mode préféré de réalisation

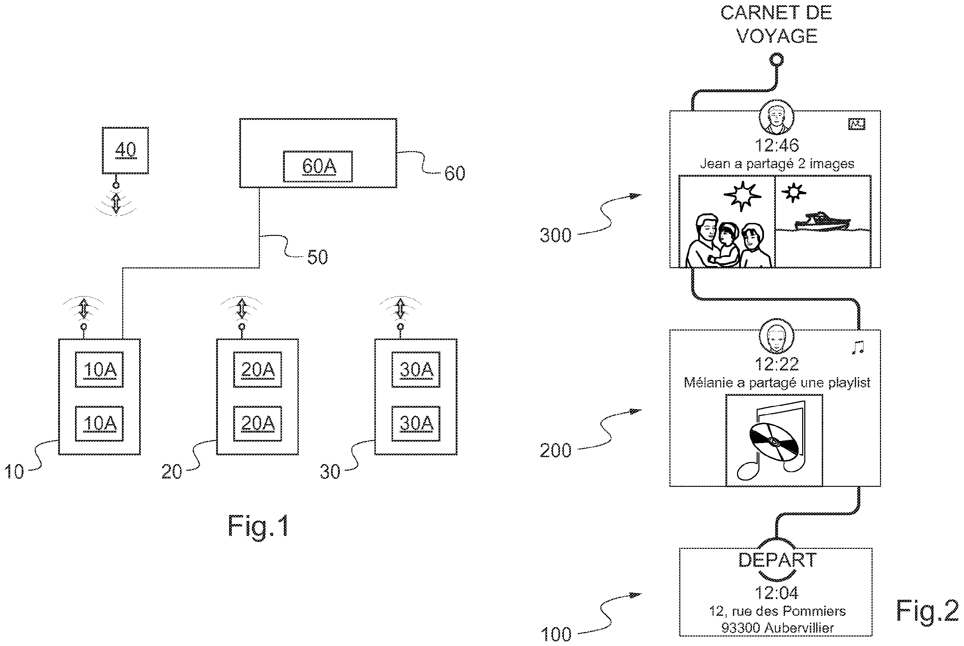

Le système de partage de contenus média 1 illustré par la figure 1 comporte une pluralité de terminaux électroniques (en l'espèce trois 10, 20, 30) embarqués dans un véhicule automobile.

Par « terminal électronique », on désigne ici un téléphone de type Smartphone, une tablette électronique, un PDA (Personal Digital Assistant), un ordinateur portable ou tout autre appareil électronique nomade ou intégré au véhicule doté d'un écran, d'une interface de saisie (clavier et/ou écran tactile), ainsi que d'un système d'exploitation tel que Microsoft® Windows®, Apple® MacOS®, Google® Android® ou Apple® IOS® apte à exécuter des applications directement intégrées à ce système d'exploitation ou bien téléchargées puis stockées dans un module mémoire.

Les terminaux 10, 20, 30 avantageusement de type nomade sont connectés à un même réseau local sans fil par l'intermédiaire d'une borne d'accès Wifi 40 implantée dans le véhicule.

Dans le cas où le véhicule n'est pas équipé d'une telle borne d'accès, l'un des terminaux (par exemple un Smartphone) fait lui-même office de borne d'accès au réseau (une telle borne d'accès pouvant par exemple être aisément générée en activant le partage de connexion dans les paramètres du système d'exploitation de ce terminal).

Chaque terminal 10, 20, 30 comprend un calculateur doté d'un ou de plusieurs microprocesseurs interconnectés 10A, 20A, 30A, ainsi qu'un module mémoire 10B, 20B, 30B comprenant de la mémoire volatile (RAM) et de la mémoire non volatile (de type EEPROM, FLASH ou SSD) sur laquelle sont stockés des contenus média, notamment de type audio, photo et/ou vidéo.

Chaque contenu média est associé à des métadonnées contenant des informations textuelles et visuelles sur ce contenu.

Pour un morceau musical, les métadonnées comprendront par exemple son titre, son auteur, le nom de l'album, le numéro du morceau et une miniature de la pochette de l'album.

Pour une liste de lecture musicale, les métadonnées comporteront par exemple son titre et une miniature de la pochette de l'album du premier morceau de cette liste.

Pour une photo, les métadonnées seront différentes et contiendront par exemple une miniature de cette photo.

Pour une vidéo, les métadonnées seront encore différentes et comprendront par exemple une miniature d'une capture d'image de cette vidéo (ou de l'affiche s'il s'agit d'un film).

Bien que pouvant être dotés de systèmes d'exploitation différents (par exemple Google® Android® pour certains et Apple® IOS® pour d'autres), les terminaux électroniques 10, 20, 30 connectés au réseau local sans fil sont aptes à partager entre eux les contenus média qu'ils hébergent par l'intermédiaire d'une application de partage pair à pair installée sur chacun d'eux et mettant en œuvre un protocole d'interopérabilité multi plate-formes tel que le protocole Alljoyn® développé par l'Allseen Alliance®.

Cette application peut soit être intégrée d'office au système d'exploitation d'un terminal électronique ou bien être téléchargée sur un marché d'application en ligne (par exemple, Play Store® pour Android® ou App Store® pour IOS®).

L'un des terminaux électroniques (en l'espèce le terminal 10) est en outre relié avantageusement par une liaison filaire de type USB 50 à un ordinateur de bord intégré 60 dans la planche de bord du véhicule et doté d'un récepteur d'information de géo-positionnement par satellite 60A (utilisant par exemple le système GPS) apte à déterminer la position du véhicule placé en visibilité des satellites.

Cette position est transmise en temps réel au terminal électronique 10 relié cet ordinateur de bord 50 qui la partage avec les autres terminaux 20, 30.

La position du véhicule peut également être obtenue directement via un récepteur d'information de géo-positionnement par satellite intégré à l'un des terminaux, puis partagée avec les autres terminaux (ce type de récepteur étant implanté quasi-systématiquement dans l'ensemble des terminaux nomades de type Smartphone et tablettes présents sur le marché).

L'utilisation intensive d'un tel récepteur ayant tendance à réduire sensiblement l'autonomie du terminal, ce dernier sera alors avantageusement branché sur un port de recharge du véhicule pendant le trajet.

On va maintenant décrire le processus selon l'invention de création d'un carnet de voyage collaboratif sur chacun des terminaux d'un tel système de partage 1.

Lorsqu'un terminal (par exemple le 10) embarqué dans le véhicule se connecte au réseau local par l'intermédiaire de son application de partage, cette dernière crée automatiquement sur ce terminal 10 un carnet de voyage électronique dans lequel elle fait apparaitre une première entrée de départ mentionnant l'horaire et la position du véhicule à cet instant.

Dès lors, chaque partage de contenu(s) média intervenant entre des terminaux du réseau local donne lieu à l'ajout automatique d'une nouvelle entrée notifiant cet événement sur le carnet de voyage de ce terminal 10 ; cette entrée mentionnant le terminal ou l'utilisateur de ce terminal ayant effectué ce partage, l'horaire et la position du véhicule au moment du partage, ainsi que certaines métadonnées associées à ce contenu média (telles que de préférence sa miniature pour une photo, la miniature de la pochette d'album pour un morceau musical ou bien encore la miniature de l'affiche ou d'une capture d'image pour une vidéo).

Le carnet de voyage se présente sous la forme d'une liste chronologique (ou timeline en anglais) dans laquelle les nouvelles entrées sont intégrées successivement au dessus des plus anciennes.

La figure 2 représente un exemple de carnet de voyage pouvant être généré par l'application.

Ce terminal 10 est ici associé à Paul tandis que les terminaux 20 et 30 sont respectivement associés à Jean et Mélanie.

On peut constater que depuis sa création à 12:04 notifiée par l'entrée de départ 100, ce carnet de voyage a été enrichi de deux entrées successives 200, 300 notifiant respectivement le partage à 12:23 d'une liste de lecture musicale par Mélanie associée au terminal 30, et celui à 12:46 de deux photos par Jean associé au terminal 20 (ces photos venant par exemple d'être prises pendant le trajet par l'appareil photo intégré à ce terminal 20).

On notera qu'une nouvelle entrée sera automatiquement ajoutée au carnet de voyage du terminal même si ce dernier n'est pas l'émetteur ou l'un des destinataires du contenu média partagé.

Ainsi si le terminal 20 partage un morceau musical avec le seul terminal 30, cet événement sera quand même notifié sur le carnet de voyage du terminal 10.

Le carnet de voyage peut être consulté pendant sa constitution via l'écran du terminal de sorte à permettre à l'utilisateur l'ayant en mains de lire les contenus médias précédemment partagés, soit directement si ce terminal les hébergent lui-même, soit par lecture en mode continu (ou streaming en anglais) si ces derniers sont hébergés par d'autres terminaux du réseau.

L'accès à ce carnet peut être demandé par exemple via un bouton tactile ou cliquable présent sur l'application de partage.

Pour une meilleure lisibilité à l'écran, seule la partie supérieure de la liste chronologique mentionnant les partages les plus récents s'affiche alors par défaut sur l'écran du terminal.

L'utilisateur peut bien entendu accéder aux événements plus anciens en faisant défiler verticalement la liste chronologique avec son doigt si l'écran d'affichage de son terminal est tactile, ou via une barre de défilement dans le cas contraire.

Le carnet de voyage est automatiquement clôturé lorsque le terminal se déconnecte du réseau local par fermeture de l'application de partage ou suite un éloignement trop important de la borne d'accès (par exemple en cas de sortie du véhicule).

L'application de partage génère alors automatiquement une dernière entrée d'arrivée mentionnant l'horaire et la position du véhicule à cet instant.

On remarquera que les carnets de voyage générés sur les terminaux peuvent sensiblement différer les uns des autres en fonction des moments où ces terminaux se connectent et se déconnectent du réseau.

Tel sera par exemple le cas lors d'un trajet en covoiturage comportant plusieurs arrêts intermédiaires où des passagers montent ou descendent du véhicule.

Après sa clôture, le carnet de voyage peut également être consulté sur l'écran du terminal via l'application de partage. Il peut également être posté via des liens hypertextes sur des réseaux sociaux en ligne tels que Facebook®, Google +®, Badoo® ou Pinterest®.

Les contenus médias partagés et non hébergés localement ne peuvent alors plus être lus directement par streaming.

Lorsque c'est possible, le carnet de voyage affiche alors des liens hypertextes vers une ou plusieurs plate-formes de téléchargement ou de streaming (telles que par exemple ITunes®, Play Store®, Spotify®, Deezer®, etc...) permettant à l'utilisateur d'acquérir légalement ces contenus.

On précisera que la présente invention n'est pas limitée au mode de réalisation décrit et que diverses modifications et/ou améliorations à la portée de l'homme du métier peuvent y être apportées sans sortir de son cadre.

Selon des variantes de réalisation de l'invention, le nombre de terminaux connectés au réseau local peut être différent de trois et par exemple compris entre deux et huit.

Selon d'autres variantes de réalisation, les contenus médias partagés peuvent comprendre également des messages écrits, des livres électroniques ou bien encore des documents PDF ou Word.

Selon encore d'autres variantes de réalisation, un événement de partage n'ait ajouté au carnet de voyage d'un terminal que si ce dernier est l'émetteur ou l'un des destinataires du contenu média partagé.

On notera enfin que l'invention peut trouver son application dans l'ensemble des véhicules terrestres ou navals, tels un bateau, un train, une automobile, ou un camion

## Revendications

1. Procédé de génération de carnets de voyage collaboratifs sur des terminaux électroniques embarqués (10, 20, 30) dans un véhicule et connectés entre eux via un réseau local, **caractérisé en ce qu'**il comporte les étapes suivantes :
- création automatique sur chaque dit terminal d'un carnet de voyage lors de la connexion de ce terminal audit réseau local ;
- partage d'un ou plusieurs contenus média hébergés par l'un desdits terminaux avec un ou plusieurs autres terminaux dudit réseau local ; et
- pour chaque événement de partage réalisé, ajout automatique dans le carnet de voyage de chacun desdits terminaux, d'une entrée (200, 300) notifiant cet événement.

2. Procédé selon la revendication 1, **caractérisé en ce que** chaque dite entrée (200, 300) associée à un événement de partage mentionne le terminal ou l'utilisateur de ce terminal ayant effectué ce partage, l'horaire au moment de ce partage ainsi que certaines métadonnées textuelles et/ou visuelles associées au ou aux contenus média partagés.

3. Procédé selon la revendication 2, **caractérisé en ce que** chaque dite entrée (200, 300) associée à un événement de partage mentionne également la position du véhicule au moment de ce partage.

4. Procédé selon l'une des revendications 1 à 3, **caractérisé en ce que** le carnet de voyage de chaque dit terminal se présente sous la forme d'une liste chronologique dans laquelle les nouvelles entrées sont intégrées successivement au dessus des plus anciennes.

5. Procédé selon l'une des revendications 1 à 4, **caractérisé en ce qu'**une première entrée de départ (100) est automatiquement générée sur chaque dit carnet de voyage lors de sa création, cette première entrée mentionnant l'horaire et la position du véhicule à cet instant.

6. Procédé selon l'une des revendications 1 à 5, **caractérisé en ce que** le carnet de voyage de chaque dit terminal est consultable pendant sa constitution de sorte à permettre à l'utilisateur de ce terminal de lire les contenus médias dont le partage a été notifié, soit directement si ce terminal les hébergent lui-même, soit par lecture en mode continu si ces derniers sont hébergés par d'autres terminaux dudit réseau local.

7. Procédé selon l'une des revendications 1 à 6, **caractérisé en ce que** le carnet de voyage de chaque dit terminal est automatiquement clôturé lorsque le terminal se déconnecte dudit réseau local.

8. Procédé selon la revendication 7, **caractérisé en ce qu'**une dernière entrée d'arrivée est automatiquement générée sur chaque dit carnet de voyage lors de sa clôture, cette dernière entrée mentionnant l'horaire et la position du véhicule à cet instant.

9. Procédé selon l'une des revendications 1 à 8, **caractérisé en ce que** le carnet de voyage de chaque dit terminal peut être posté sur des réseaux sociaux en ligne grâce à des liens hypertextes.

10. Procédé selon l'une des revendications 1 à 9, **caractérisé en ce que** le partage des contenus médias et la génération desdits carnets de voyages sont réalisés par une application de partage pair à pair installée sur chacun desdits terminaux et mettant en œuvre un protocole d'interopérabilité multi plate-formes.

## Patentansprüche

1. Verfahren zum Erzeugen von kooperativen Fahrtenbüchern auf bordeigenen elektronischen Endgeräten (10, 20, 30) in einem Fahrzeug, die über ein lokales Netzwerk miteinander verbunden sind, **dadurch gekennzeichnet, dass** es die folgenden Schritte umfasst:
- automatische Erstellung eines Fahrtenbuchs auf jedem der Terminals, wenn dieses mit dem lokalen Netz verbunden ist;
- Teilen eines oder mehrerer Medieninhalte, die von einem der Endgeräte gehostet werden, mit einem oder mehreren anderen Endgeräten des lokalen Netzwerks; und
- für jedes durchgeführte Sharing-Ereignis automatisch einen Eintrag (200, 300) in das Fahrtenbuch jedes der genannten Terminals einfügt, der dieses Ereignis meldet.

2. Verfahren nach Anspruch 1, **dadurch gekennzeichnet, dass** jeder Eintrag (200, 300), der mit einem Freigabeereignis verbunden ist, das Endgerät oder den Benutzer dieses Endgerätes, der diese Freigabe durchgeführt hat, die Zeit zum Zeitpunkt dieser Freigabe sowie bestimmte textliche und/oder visuelle Metadaten, die mit dem/den freigegebenen Medieninhalt(en) verbunden sind, erwähnt.

3. Verfahren nach Anspruch 2, **dadurch gekennzeichnet, dass** jeder Eintrag (200, 300), der mit einem Sharing-Ereignis verbunden ist, auch die Position des Fahrzeugs zum Zeitpunkt dieses Sharings angibt.

4. Verfahren nach einem der Ansprüche 1 bis 3, **dadurch gekennzeichnet, dass** das Fahrtenbuch jedes dieser Terminals die Form einer chronologischen Liste hat, in der neue Einträge sukzessive über den ältesten integriert werden.

5. Verfahren nach einem der Ansprüche 1 bis 4, **dadurch gekennzeichnet, dass** auf jedem Fahrtenbuch bei dessen Erstellung automatisch ein erster Eintrag (100) erzeugt wird, der die Uhrzeit und die Position des Fahrzeugs zu diesem Zeitpunkt angibt.

6. Verfahren nach einem der Ansprüche 1 bis 5, **dadurch gekennzeichnet, dass** das Fahrtenbuch jedes Endgeräts während seiner Erstellung konsultierbar ist, um dem Benutzer dieses Endgeräts zu ermöglichen, die Medieninhalte zu lesen, deren gemeinsame Nutzung gemeldet wurde, entweder direkt, wenn dieses Endgerät sie selbst hostet, oder durch Lesen im kontinuierlichen Modus, wenn diese von anderen Endgeräten des lokalen Netzes gehostet werden.

7. Verfahren nach einem der Ansprüche 1 bis 6, **dadurch gekennzeichnet, dass** das Fahrtenbuch jedes Endgerätes automatisch geschlossen wird, wenn das Endgerät die Verbindung zum lokalen Netz trennt.

8. Verfahren nach Anspruch 7, **dadurch gekennzeichnet, dass** auf jedem Fahrtenbuch bei dessen Schließung automatisch ein Eintrag über die letzte Ankunft erzeugt wird, wobei dieser letzte Eintrag die Zeit und die Position des Fahrzeugs zu diesem Zeitpunkt angibt.

9. Verfahren nach einem der Ansprüche 1 bis 8, **dadurch gekennzeichnet, dass** das Reisetagebuch eines jeden Terminals über Hyperlinks in soziale Online-Netzwerke eingestellt werden kann.

10. Verfahren nach einem der Ansprüche 1 bis 9, **dadurch gekennzeichnet, dass** die gemeinsame Nutzung von Medieninhalten und die Erstellung der Reiseprotokolle durch eine Peer-to-Peer-Anwendung erfolgt, die auf jedem der Endgeräte installiert ist und ein Multiplattform-Interoperabilitätsprotokoll implementiert.

## Claims

1. A method of generating collaborative travel logs on on-board electronic terminals (10, 20, 30) in a vehicle and connected to each other via a local network, **characterised in that** it comprises the following steps:
- automatic creation on each said terminal of a travel log when this terminal is connected to said local network;
- sharing one or more media contents hosted by one of said terminals with one or more other terminals of said local network; and
- for each sharing event performed, automatically adding to the travel log of each of said terminals an entry (200, 300) notifying this event.

2. Method according to claim 1, **characterised in that** each said entry (200, 300) associated with a sharing event mentions the terminal or the user of this terminal having carried out this sharing, the time at the time of this sharing as well as certain textual and/or visual metadata associated with the shared media content(s).

3. Method according to claim 2, **characterised in that** each said entry (200, 300) associated with a sharing event also mentions the position of the vehicle at the time of this sharing.

4. A method according to any of claims 1 to 3, **characterised in that** the travel log of each said terminal is in the form of a chronological list in which new entries are integrated successively above the oldest.

5. Method according to one of claims 1 to 4, **characterized in that** a first departure entry (100) is automatically generated on each said travel log when it is created, this first entry mentioning the time and the position of the vehicle at that moment.

6. Method according to one of claims 1 to 5, **characterised in that** the travel log of each said terminal is consultable during its creation so as to allow the user of this terminal to read the media contents of which the sharing has been notified, either directly if this terminal hosts them itself, or by reading in continuous mode if the latter are hosted by other terminals of the said local network.

7. Method according to one of claims 1 to 6, **characterised in that** the travel log of each said terminal is automatically closed when the terminal disconnects from said local network.

8. A method according to claim 7, **characterized in that** a last arrival entry is automatically generated on each said travel log upon its closure, this last entry mentioning the time and position of the vehicle at that moment.

9. A method according to any of claims 1 to 8, **characterized in that** the travel log of each said terminal can be posted on online social networks through hyperlinks.

10. Method according to one of the claims 1 to 9, **characterised in that** the sharing of media contents and the generation of said travel logs are performed by a peer-to-peer sharing application installed on each of said terminals and implementing a multi-platform interoperability protocol.
